# EUROPEAN PATENT APPLICATION

(11) **EP 1 183 978 A1**
(43) Date of publication of application: **06.03.2002**
(21) Application number: 01850148.6
(22) Date of filing: 28.08.2001
(51) Int. Cl.: A47K 7/02, A45D 44/00, A47L 13/18, B32B 5/26

(54) **Wipe with gripping means**

(30) Priority: 04.09.2000 SE 0003114
(71) Applicant: SCA Hygiene Products AB, 405 03 Göteborg (SE)
(72) Inventor: Gustafsson, Anders, 427 35 Billdal (SE); Johansson, Kerstin, 523 38 Ulricehamn (SE); Widlund, Urban, 435 43 Pixbo (SE)
(74) Representative: Romare, Laila Anette

(57) **Abstract**

The invention relates to a wipe (100), especially for hygiene purposes, having a first surface (102) and a second surface (103), with a hydrophilic drying material (101) arranged on the first surface (102). A tab-shaped gripping member (104) is arranged on the second surface (103), which gripping member (104) has a length direction and a width direction, the length of the gripping member being at least 10 millimetres and the width of the gripping member not exceeding 5 millimetres, and the gripping member allows the wipe (100) to be held by securely gripping it longitudinally between two fingers of the hand.

## Description

### TECHNICAL FIELD

The invention relates to a wipe having a first surface and a second surface, with a hydrophilic material layer arranged on the first surface and a gripping member arranged on the second surface.

### PRIOR ART

For cleaning the genital and anal region, for example when visiting the toilet, or for washing/drying of infants or of incontinent bedridden adults, it has until now been customary to use toilet paper, wipes, towelettes or the like. However, the known drying means are associated with a number of disadvantages. For example, when using toilet paper or wipes for drying, an unnecessarily large amount of material is used up in order to form a "handle" to secure the drying material in relation to the hand and to ensure that the hand which is holding the drying material is protected from contamination. Moreover, toilet paper and wipes afford poor precision during the drying procedure and, especially in the nursing context, result in ineffective and unhygienic handling of the drying material.

Another problem arises in connection with wiping cloths for polishing purposes. Such cloths have to be moved at great speed across the surface which is to be polished and, as a result of the friction between the polished surface and the polishing cloth, it is easy for the polishing cloth to slip out of the user's hand. Polishing does not always require that the drying material be hydrophilic, since polishing is often carried out on dry or oily surfaces. In the latter case, it may be expedient to use a drying material which absorbs hydrophobic liquids, such as oils.

To make drying easier, to save material and to provide better protection against contamination, it has been proposed, for example in DE 4117827 and WO 96/16217, to design wipes as pockets or mitts into which the user can insert a hand. However, such mitts or pockets still require a relatively large amount of material. In addition, there is a considerable risk of the mitt or pocket slipping off the hand, or slipping round the hand during use. Thus, the known drying mitts do not afford satisfactory protection against contamination or sufficient precision and control during the drying procedure.

There therefore remains a need for an improved wipe for cleaning the genital and anal region, for polishing purposes, or similar.

### DISCLOSURE OF THE INVENTION

The present invention provides a wipe of the type mentioned in the introduction and intended for example for hygiene purposes, which wipe essentially eliminates the problems of the known wipes and mitts.

A wipe designed according to the invention is principally distinguished by the fact that the gripping member is in the form of a tab projecting from the second surface and has a length direction and a width direction, the length of the gripping member being at least 10 millimetres and the width of the gripping member not exceeding 5 millimetres, and that the gripping member can be held securely by gripping it longitudinally between two fingers of the hand. The length direction of the gripping member is the direction which coincides with the length direction of the user's fingers when the wipe is being used. The width direction is at right angles to the length direction of the gripping member, and the width of the gripping member is the extent in the width direction when the gripping member is held securely between two fingers. Thus, the gripping member must not be so wide that it becomes uncomfortable or difficult to hold securely between two fingers.

To obtain a good hold and to facilitate gripping of the tab-shaped gripping member, it is expedient for the latter, at least somewhere along its length, to project from the hydrophilic material layer by at least 5 millimetres, and preferably for the tab-shaped gripping member to project from the hydrophilic material layer by 10 - 40 millimetres. The upper limit for the height of the tab-shaped gripping member or for its width is not critical for the gripping function, but for reasons of material consumption, and from the point of view of handling, it is preferable that the gripping member is not too wide.

According to one embodiment of the invention, the tab-shaped gripping member is formed by a material fold in a material layer. Such a gripping member thus comprises double plies of the material layer. It is also possible to use laminated material layers, for example a laminate of nonwoven material and a plastic film, by which means the gripping member comprises a liquid barrier. The separate material section can be in the form of a material band or a layer which after folding has substantially the same planar extent as, or a different planar extent than, the hydrophilic material layer. Laminating several layers of material also increases the stiffness and thus the stability and grippability of the gripping member.

The separate material section is fixed to the second surface of the hydrophilic material layer, either directly against this surface, or against an intermediate material layer which is arranged across the second surface of the hydrophilic material layer. Examples of such intermediate material layers are liquid-tight material layers, bacteria-tight material layers, strengthening layers, or similar. The separate material section forming the gripping member can be arranged across the whole of the second surface of the hydrophilic material layer or over just part of this surface.

According to one embodiment of the invention, at least two tab-shaped gripping members are arranged on the second surface. By adapting the distance between the tab-shaped gripping members so that it corresponds to the width of one or two fingers, it is possible to grip both gripping members at the same time. Such dual holding permits a secure hold and a high level of control over the wipe during the drying procedure. Two or more gripping members additionally afford the user the possibility of choosing to use either one or two gripping members. By choosing different gripping members, it is also possible to determine the position of the wipe in relation to the hand, and to move the wipe in relation to the hand, so that different parts of the wipe can be used for drying. The distance between two adjacent tab-shaped gripping members should be from 2 centimetres to 8 centimetres and preferably from 2.5 centimetres to 6 centimetres.

The hydrophilic material layer advantageously comprises liquid-absorbing material, for example cellulose pulp, cotton fibres, peat, or similar, so that body fluids can be absorbed by the wipe.

To facilitate cutting of the wipes according to the invention, the outer contour of the gripping tabs, when the gripping tabs are folded down against the gripping surface, can be designed to at least partially coincide with the outer contour of the hydrophilic material layer of the wipe. When the gripping tabs are formed by a folded material section, it is also possible, after the gripping tabs have been formed, to cut their outer contour to match the outer contour of the rest of the wipe.

It can also be expedient to arrange a protective layer between the gripping member and the hydrophilic material layer of the wipe in order to protect the user's hand against soiling. Such a protective layer can, for example, be a plastic film or a hydrophobic nonwoven material which counters movement of liquid to the user's hand. It is also conceivable to use bacteria-tight material, material with bactericidal properties, material with high absorbency, or similar. It is of course possible for the tab-shaped gripping member or gripping members to be made of the same material as the protective layer, or to let the tab-shaped gripping member be part of the protective layer.

The stability and control of the wipe, during drying, and its grippability increase as the length of the gripping member increases, at least to a length approximately corresponding to the length of a finger. It is therefore advantageous if the gripping member has an extent in the longitudinal direction which is at least 1.5 centimetres and preferably at least 3 centimetres.

Since at least one finger is situated on each side of the tab-shaped gripping member during use of the wipe according to the invention, the material of the gripping member can be secured firmly between the fingers on both sides of the gripping member. This means that the wipe is prevented from slipping off the hand during the drying procedure. In addition, the wipe can be held in a predetermined position, as a result of which soiled parts of the wipe are prevented from inadvertently coming into contact with surfaces outside the drying location. The fact that the wipe can be locked in a defined position in relation to the user's hand also means that the user has greater control over the wipe during the drying procedure, as a result of which drying is made easier and can be done with greater precision and with a better end result than has been possible with the previously known wipes. In accordance with the invention it is thus possible to achieve greater protection against soiling of the user's hand, better holding of the wipe, and greater precision and accuracy in the drying procedure.

The invention thus makes available a wipe with a drying surface which is designed to offer optimum drying properties and a gripping member which is designed to offer reliable and hygienic holding of the wipe during the drying procedure.

### BRIEF DESCRIPTION OF THE FIGURES

The invention will now be described in greater detail with reference to the figures shown in the attached drawings. Of these:
Figure 1 shows a wipe according to a first embodiment of the invention, seen from the side which, during drying, is intended to be directed away from the drying area;
Figure 2 shows a perspective view of how the wipe in Figure 1 can be held securely during use;
Figure 3 shows a wipe according to a second embodiment of the invention, seen from the side which, during drying, is intended to be directed away from the drying area;
Figure 4 shows a section along the line IV-IV through the wipe in Figure 3;
Figure 5 shows a perspective view of how the wipe in Figures 3 and 4 can be held securely during use;
Figure 6 shows a wipe according to a third embodiment of the invention, seen from the side which, during drying, is intended to be directed away from the drying area;
Figure 7 shows a section through a wipe according to a fourth embodiment of the invention;
Figure 8 shows a section through a wipe according to a fifth embodiment of the invention, and
Figure 9 shows a wipe according to a sixth embodiment of the invention.

### DESCRIPTION OF EMBODIMENTS

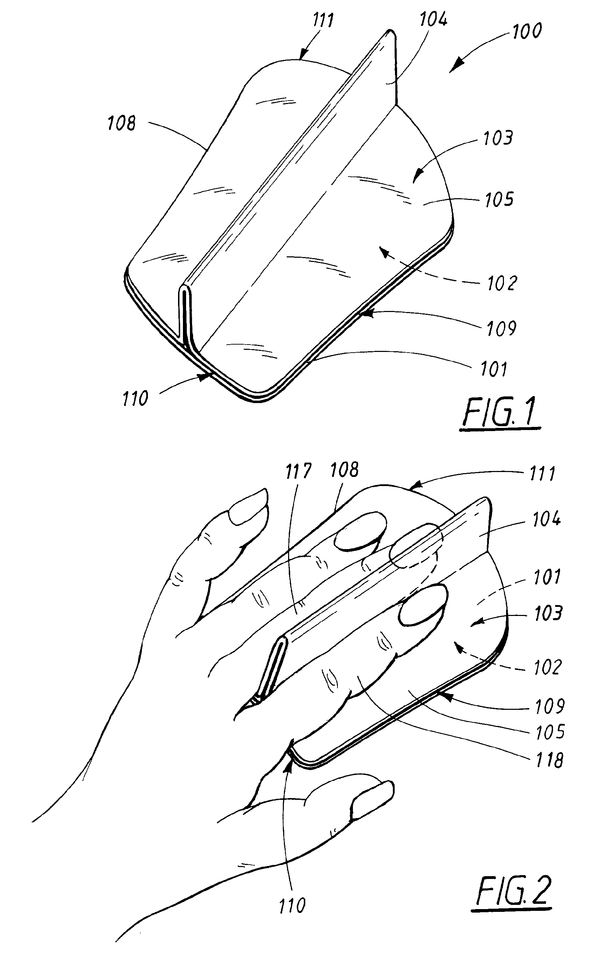

The wipe 100 shown in Figures 1 - 3 is shown from the side which is intended to be gripped during use and comprises a first layer, the drying layer 101, made of a liquid-absorbing or at least hydrophilic material. Suitable materials in this case are layers of tissue, thin flexible layers of absorbent foam and textiles or textile-like material, preferably so-called nonwoven material comprising absorbent or at least hydrophilic fibres. Examples of fibres that can be used in this connection are cellulose fibres, regenerated cellulose, polyester, polyolefin fibres which have been rendered hydrophilic, or similar. The drying layer 101 can comprise absorbent material together with nonabsorbent binding fibres, strengthening fibres, or similar. For example, nonwoven material consisting of fibre mixtures with absorbent and nonabsorbent fibres can be used. However, it is preferred that the fibres used essentially consist of fibres which are hydrophilic or which have been treated in order to obtain a hydrophilic surface, for example with wetting agents or by chemical or physical modification of the fibres. The drying layer 101 can comprise one or more plies of material and can also be provided with a cover sheet, preferably of nonwoven material on the drying surface 102, which is the surface intended to be directed towards the surface to be dried. The drying layer 101 also has a gripping surface 103 on which a gripping member 104 is arranged.

The gripping member 104 is formed by a second layer 105 which is fixed to the drying layer 101 by adhesive bonding, welding, or similar. The join between the drying layer 101 and the second layer 105 can be made continuous over the entire mutually facing surfaces of the drying layer 101 and the second layer, or can be in the form of discrete attachment points or attachment areas arranged between the layers.

The second layer 105 can consist of the same material as the drying layer or of some other layer material suitable for this purpose. The second layer 105 can be chosen from a larger group of materials, since no requirements in terms of absorption properties are placed on this layer. Thus, the second layer 105 can be a layer of tissue, a nonwoven layer, a plastic film, a layer of paper, or similar. However, the second layer 105 is expediently liquid-tight, or at least hydrophobic, so that it resists penetration of liquid during the drying procedure. Improved protection against soiling of the user's hand during drying is achieved in this way.

The wipe 100 has a trapezoid shape with a longitudinal direction and a transverse direction and with two equal long side edges 108, 109 extending in the longitudinal direction and two end edges 110, 111 extending in the transverse direction, of which one end edge 110 is slightly shorter than the other end edge 111.

The gripping member 104 is formed by a gripping tab projecting from the gripping surface 103 of the drying layer and with an essentially rectangular shape and is formed by a fold in the second layer 105 which extends in the longitudinal direction of the wipe. The fold can be closed, for example by adhesive bonding or welding, or can be an open material fold.

During use of the wipe 100, the gripping member 104 is held securely between two fingers, for example between the middle finger 117 and the index finger 118, as is shown in Figure 2. To protect the fingers against soiling, the wipe 100 should have a width which at least exceeds the width of two fingers and preferably should have a width which exceeds the width of three fingers, as is shown in Figure 2.

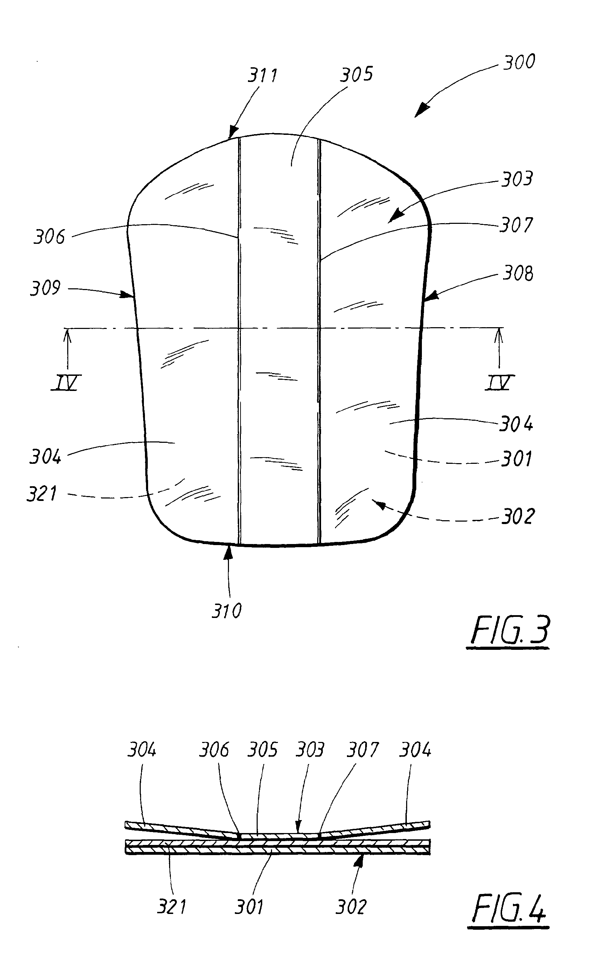

The wipe 300 shown in Figures 3 - 5 is again seen from the side which is intended to be gripped during use. The wipe 300 comprises a drying layer 301 with a drying surface 302 and a second surface, the gripping surface 303, which is directed away from the drying surface 302. A further material layer, the protective layer 321, is arranged on the second surface 303 of the drying layer. The protective layer 321 is expediently a layer of tissue, a nonwoven layer, or a liquid-tight layer such as a plastic layer, or a hydrophobic nonwoven layer. Alternatively, the protective layer 321 can be a laminate of an absorbent or hydrophilic layer and a liquid-tight layer, for example a layer of tissue and a plastic layer.

Two gripping members 304 which are formed by a material layer 305, fixed to the surface of the protective layer 321 directed away from the drying layer 301, and along two parallel attachment lines 306, 307, for example by adhesive bonding, stitching or welding. The join can be in the form of a continuous seam along the whole of each attachment line 306, 307 or can be discontinuous and consist of two or more attachment areas.

The attachment lines 306, 307 are expediently arranged at a distance from each other which approximately corresponds to the width of one finger. Alternatively, the distance between the attachment lines and thus between the gripping members 304 can correspond to approximately two finger widths. It is also possible, but less preferable, to arrange the gripping members 304 at any distance from each other. In the latter case, only one gripping member 304 can generally be used for holding the wipe 300. However, the user has the possibility of choosing which of the gripping members to use and can in this way control the position of the wipe in relation to the hand, which is of course an advantage. Also in the alternative embodiments in which the distance between the gripping members 304 corresponds to one or two finger widths, the user can of course choose only to use one of the gripping members 304.

Like the wipe shown in Figures 1 and 2, the wipe 300 has a trapezoid shape with a longitudinal direction and a transverse direction and with two equal long side edges 308, 309 extending in the longitudinal direction and two end edges 310, 311 extending in the transverse direction, of which one end edge 310 is slightly shorter than the other end edge 311. In the examples shown in Figures 1 - 5, the gripping members 304 extend the whole distance between the end edges 110,111; 310, 311.

All the layers included in the wipe 300 have essentially the same shape and planar extent, which is an advantage from the manufacturing point of view since wipes can be cut out directly from a co-laminated web comprising all the layers 301, 305, 321.

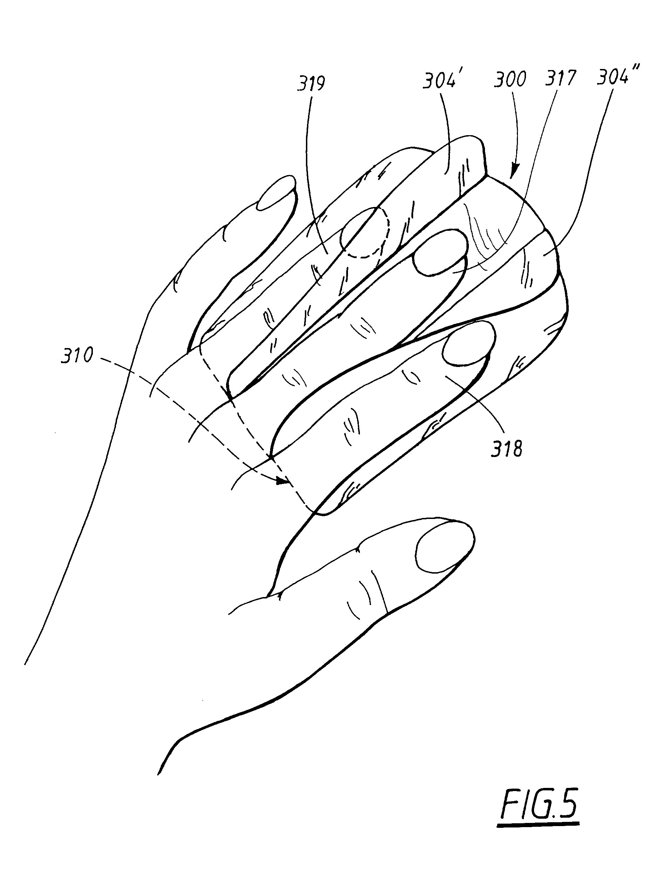

The wipe shown in Figures 3 and 4 is used in a similar way as the wipe in Figures 1 and 2. Thus, one or two fingers are arranged between the gripping members 304, expediently from the shorter end edge 310 of the wipe, and one or more gripping members 304 are held securely between one finger introduced between the gripping members 304 and at least one adjacent finger between the respective gripping member 304 and the corresponding side edge. As is shown in Figure 5, the wipe 300 can be held securely using three fingers when the distance between the gripping members 304 is adapted to one finger width, in which case one gripping tab 304' is held securely between the ring finger 319 and the middle finger 317 and one gripping tab 304" is held securely between the middle finger 317 and the index finger 318.

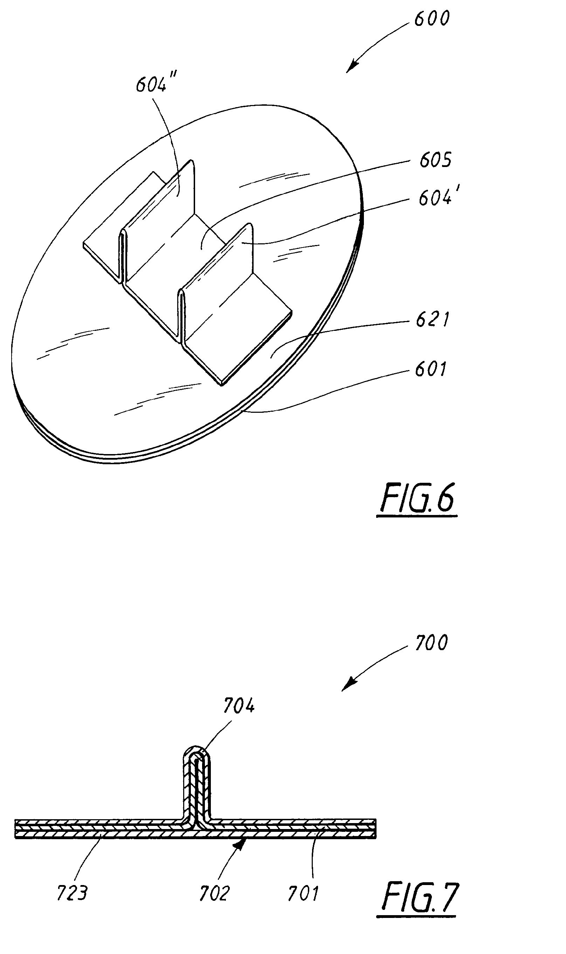

Unlike the wipes shown in Figures 1 - 5, the wipe 600 shown in Figure 6 has an oval shape and comprises a drying layer 601 with a drying surface 602 and a gripping surface 603, and with a protective layer 621, for example a plastic film arranged across the gripping surface 603. A strip-shaped material layer 605 is arranged on the surface of the protective layer 621 directed away from the drying layer and is fixed to the protective layer 621 in folded form, so that two tab-shaped gripping members 604', 604" are obtained. The strip-shaped material layer 605 can consist of a plastic film, a nonwoven material, a laminate of plastic film and nonwoven, or similar. By arranging a plastic film inside a nonwoven material, gripping members 604', 604" are obtained with a liquid-tight and bacteria-tight barrier between the user's hand and the wipe. At the same time, the nonwoven material can be chosen such that the friction between the user's hand and the gripping members is greater than for a plastic film, as a result of which the securing properties of the gripping members are improved.

Figure 7 shows a cross section of a wipe 700 with a gripping member 704 according to the invention. The gripping member 704 is in the form of a folded tab and comprises an outer cover material, for example a plastic film, or a hydrophobic preferably liquid-resistant nonwoven material, and an inner material which is part of the drying layer 701 of the wipe. By letting the drying layer 701 extend into the gripping member 704, a stronger and more stable gripping member is obtained which is easier to grip and secure. The wipe in Figure 7 is further provided with a liquid-permeable cover sheet 723, which is fixed to the drying surface 702 of the drying layer 701. Such liquid-permeable cover sheets can of course be used together with any of the wipes shown in the figures.

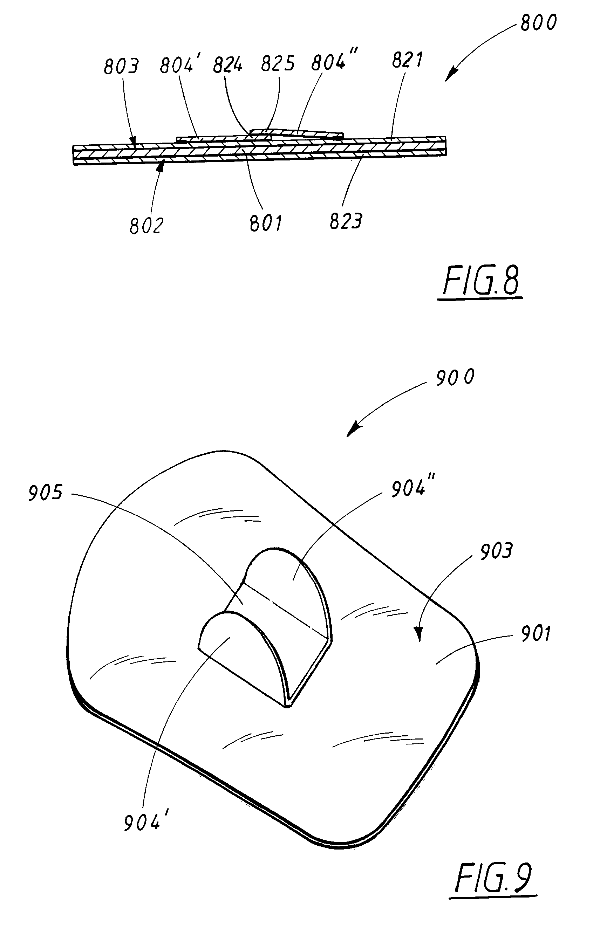

A further gripping member arrangement is shown in Figure 8. Like the wipe in Figure 7, the wipe 800 is shown in cross section and, like the wipe 700 shown in Figure 7, comprises a liquid-permeable cover sheet 823 arranged across the drying surface of a drying layer 801. The opposite surface of the drying layer, namely the gripping surface 803, is covered by a protective layer 821 which is fixed to the drying layer in a conventional manner.

The gripping members consist of two gripping tabs 804', 804" which are fixed at a distance from each other, as in the embodiment shown in Figures 3 - 5. In contrast to the previously described embodiment, however, the gripping tabs 804', 804" are fixed with their free ends 824, 825 directed in towards the longitudinal centre line of the wipe 800. In the example shown, the free ends 824, 825 overlap slightly, which facilitates gripping of the tabs. The variant shown in Figure 8 is advantageous since it is easy to lift the gripping tabs 804', 804" up from the protective layer 821 by bending the wipe along the longitudinal centre line, so that the free ends 824, 825 of the gripping tabs 804', 804" can be easily gripped. Depending on the size of the wipe and the distance between the gripping tabs 804', 804", it is of course possible to arrange gripping tabs 804', 804" which overlap each other to a greater extent than is shown in Figure 8, or which do not overlap each other at all.

Figure 9 is a diagrammatic representation of a wipe 900 with a relatively stiff material section 905, such as stiff plastic, with two pre-formed gripping tabs 904', 904". The stiff material section 905 is fixed to the wipe with the gripping tabs 904', 904" projecting from the gripping surface 903 of the drying layer 901. As the gripping tabs 904', 904" are not formed by a material fold, they can be given any expedient shape, for example rounded, as is shown in Figure 9.

Although the wipes in several of the illustrative embodiments shown have a trapezoid shape, it is of course possible, within the scope of the invention, to use a number of other shapes. For example, square, rectangular, circular, oval or triangular wipes can be used. The size of the wipe can of course be varied according to the area of use. However, the wipe should have a width which at least corresponds to two finger widths. Moreover, the drying layer can be made up of one or more layers of different or similar composition. The absorption capacity of the drying layer can of course be adapted according to the area of use. The wipe can of course be of the towelette type. The use of the different protective layers and cover sheets described is of course applicable to all the various embodiments. It is likewise possible to provide a wipe according to the invention with more than one tab-shaped gripping member.

## Claims

1. Wipe (100) having a first surface (102) and a second surface (103), with a drying layer (101) arranged on the first surface (102) and a gripping member (104) arranged on the second surface (103), **characterized in that** the gripping member (104) is in the form of a tab projecting from the second surface (103) and has a length direction and a width direction, the length of the gripping member (104) being at least 10 millimetres and the width of the gripping member (104) not exceeding 5 millimetres, and **in that** the gripping member (104) allows the wipe (100) to be held securely by gripping it longitudinally between two fingers of the hand.

2. Wipe according to Claim 1, in which the tab-shaped gripping member (104) projects from the drying layer (101) by at least 5 millimetres.

3. Wipe according to Claim 2, in which the tab-shaped gripping member (104) projects from the drying layer (101) by 10 - 40 millimetres.

4. Wipe according to any of Claims 1 - 3, in which the tab-shaped gripping member (104) is formed by a material fold.

5. Wipe according to any of the preceding claims, in which the tab-shaped gripping member (104; 304) is formed by a separate material section (105; 305) which is fixed to the second surface (103; 303) of the drying layer (101; 301).

6. Wipe according to any of the preceding claims, in which at least two tab-shaped gripping members (304) are arranged on the second surface (303).

7. Wipe according to Claim 6, in which the distance between two adjacent gripping members is from 2 centimetres to 8 centimetres.

8. Wipe according to Claim 7, in which the distance between two adjacent gripping members is from 2.5 centimetres and 6 centimetres.

9. Wipe according to any of Claims 5 - 8, in which the outer contour of the gripping member (304) coincides with the outer contour of the drying layer (301) of the wipe (300).

10. Wipe according to any of the preceding claims, in which the drying layer (101) comprises liquid-absorbing material.

11. Wipe according to any of the preceding claims, in which a protective layer (321) is arranged between the gripping member (304) and the drying layer (301) of the wipe.

12. Wipe according to any of the preceding claims, in which the gripping member (604', 604"; 704', 704"; 804', 804"; 904', 904") has an extent in the longitudinal direction which is at least 1.5 centimetres and preferably at least 3 centimetres.
